# EUROPÄISCHE PATENTSCHRIFT

(11) **EP 1 394 131 B1**
(45) Veröffentlichungstag und Bekanntmachung des Hinweises auf die Patenterteilung: **31.03.2010**
(21) Anmeldenummer: 03450182.5
(22) Anmeldetag: 05.08.2003
(51) Int. Cl.: C04B 5/06, B22F 9/08

(54) **Verfahren zum Zerstäuben und Granulieren von Schmelzen sowie Vorrichtung zur Durchführung dieses Verfahrens**
Process and apparatus for granulating of molten materials
Procédé et dispositif pour la granulation de matériaux en fusion

(30) Priorität: 29.08.2002 AT 12922002
(43) Veröffentlichungstag der Anmeldung: 03.03.2004
(73) Patentinhaber: Holcim Technology Ltd., 8645 Jona (CH)
(72) Erfinder: Edlinger, Alfred, 6780 Bartholomäberg (AT)
(74) Vertreter: Haffner, Thomas M.

(56) Entgegenhaltungen:
- EP-A2- 1 190 996
- WO-A-00/32306
- WO-A-00/44942
- WO-A-01/04363

## Beschreibung

Die Erfindung bezieht sich auf ein Verfahren zum Zerstäuben und Granulieren von Schmelzen, insbesondere oxidischen Schlacken-, Glas-, Metall- oder thermoplastischen Schmelzen, bei welchem die Schmelzen in einer Vorkammer mit Brennern erhitzt und als einen Treibstrahl umgebender Mantel in eine Granulierkammer ausgestoßen werden, sowie auf eine Vorrichtung zur Durchführung dieses Verfahrens.

Verfahren zum Granulieren und Zerkleinern von flüssigen Schmelzen und insbesondere von Schlacken oder Metallschmelzen sowie Glasschmelzen, bei welchem die Schmelzen mit einem Fluidstrahl in eine Kühlkammer versprüht werden, sind in unterschiedlichen Ausbildungen bereits bekannt geworden. Die EP 1038976 A1 zeigt und beschreibt ein derartiges Verfahren, bei welchem zur Verbesserung der Materialeigenschaften des Granulates so vorgegangen wird, dass die versprühten Schmelztröpfchen im Sprühstrahl durch Nachverbrennung von Heißgasen im Inneren der Kühlkammer auf Temperaturen zwischen 1500°C und 1750°C aufgeheizt werden, wobei die nachfolgende Kühlkammer mit Strahlungskühlkörpern ausgebildet ist. Diese Verfahrensweise geht von der Überlegung aus, dass die Kühlgeschwindigkeit von Teilchen vom Durchmesser der Teilchen abhängig ist, wobei die Strahlungskühlung mit abnehmender Teilchengröße stark zunimmt. Ein möglichst feines Versprühen hat aber auch den Vorteil, dass dann, wenn beispielsweise Zuschlagstoffe für die Zementindustrie erzeugt werden sollen, ein nachfolgender Mahlprozess entbehrlich werden kann, wenn eine hinreichend feine Zerteilung der Tröpfchen bzw. Teilchen erfolgte. Flüssige Schlacken und insbesondere oxidische Schlacken liegen in aller Regel bei Temperaturen zwischen 1250 °C und 1650°C vor, wobei die Viskosität derartiger Schmelzen mit zunehmender Temperatur abnimmt. Eine abnehmende Viskosität hat zur Folge, dass es leichter gelingt, beim Versprühen besonders kleine Teilchen herzustellen. In der EP 1038967 A1 wurde dies in erster Linie im Hinblick auf eine effiziente Strahlungskühlung angestrebt. In der WO 01/62987 A1 wurde eine Einrichtung zum Zerstäuben von flüssigen Schmelzen und insbesondere von oxidischen Schlacken oder Gläsern vorgeschlagen, bei welcher ein Schlackentundish vorgesehen ist, welcher eine Auslassöffnung aufweist. In diese Auslassöffnung tauchte eine Lanze zum Einstoßen von Gasen oder Dampf unter Ausbildung eines Ringspaltes ein. Die Lanze war von einem unabhängig von der Höhenverstellbarkeit der Lanze höhenverstellbaren Außenrohr umgeben, sodass durch Absenken und Anheben des Außenrohres die Breite des Ringspaltes und damit der Materialfluss der Schmelze eingestellt werden konnte, während mit der inneren Lanze Treibgas eingebracht werden konnte. Als Treibgasstrom wurde hier bevorzugt autotherm erzeugter Dampf eingesetzt, wobei für eine entsprechende Erhitzung oder Überhitzung des Dampfes ein relativ hoher Aufwand betrieben werden musste. Weitere Verbesserungen und Abwandlungen dieses Verfahrensprinzips sind unter anderem in der WO 02/04687 A1 sowie der WO 00/44942 zu entnehmen. In diesem Falle wurde zum Ausstoßen der Schmelze ein Verbrennungsabgas eingesetzt, wobei heiße Verbrennungsabgase, insbesondere nach vollständiger Verbrennung, zum Versprühen der Schmelze Verwendung fanden. Insgesamt wurde beobachtet, dass die Verwendung eines Treibgases mit besonders hohen Temperaturen aufgrund der durch die höhere Temperatur erhöhten Gasviskosität zu einer besseren zerkleinerung des Strahles und damit zu einer feineren Zerteilung führt, wobei die Aufbereitung, Kompression und Verteilung der Treibgase mit relativ hohem Aufwand verbunden war.

Die Erfindung zielt nun darauf ab ein Verfahren der eingangs genannten Art zu schaffen, bei welchem bei weitestgehend freier Wahl des jeweiligen Treibgases oder Treibdampfes nicht nur eine entsprechende Überhitzung der Schmelze zum Zwecke der Absenkung der Viskosität der Schmelze sondern auch eine entsprechende Überhitzung des Treibgases bzw. Treibdampfes im Ausstoßbereich in einfacher Weise bewirkt werden kann, wobei die energetische Nutzung der einzusetzenden Wärme und die entsprechende Energierückgewinnung verbessert werden kann. Zur Lösung dieser Aufgabe besteht das erfindungsgemäße Verfahren im wesentlichen darin, dass dem Treibstrahl heiße Verbrennungsgase aus der Vorkammer zugemischt werden. In der Vorkammer und insbesondere in einem Tundish mit entsprechendem Deckel wird die erforderliche Wärme für die Überhitzung der Schmelze voraussetzungsgemäß mit Brennern eingebracht. Dadurch, dass nun ein beliebiger Treibstrahl, wie beispielsweise Treibdampf oder andere Treibgase mit vergleichsweise niederen Drucken in der Größenordnung von 1 bar bis 10 bar dazu eingesetzt werden, heiße Verbrennungsgase aus der Vorkammer anzusaugen und zuzugeben, entsteht im Bereich, in welchem dieses heiße Treibgas nunmehr als Seele eines schlauchförmigen Mantels der Schmelze ausgestoßen wird, eine besonders hohe Temperatur und bedingt durch die damit erhöhte Gasviskosität eine sehr gute Scherwirkung auf den Innenmantel des ausströmenden Schmelzefilmes. Die Schmelze strömt hierbei je nach Einstellung eines entsprechenden Wehrrohres unter Ausbildung eines Ringspaltes als besonders dünner Film und damit als besonders dünner Mantel des Treibgasstrahles aus. Für eine besonders effiziente Zerteilung, kann es nun vorteilhaft sein die schlauchartige Gestalt dieses Strahles entsprechend über einen gewissen Mindestzeitraum aufrechtzuerhalten, wodurch dann eine gezielte und besonders wirksame zerkleinerung erfolgen kann. Mit Vorteil wird hierbei das erfindungsgemäße Verfahren so durchgeführt, dass die heißen Verbrennungsgase der Vorkammer über einen einstellbaren Drosselquerschnitt in einem die Treibstrahldüse umgebenden Ringraum angesaugt und mit dem Treibstrahl als Seele des rohrförmigen Schmelzestrahles in den Granulierraum ausgestoßen werden, wobei zur Stabilisierung der im wesentlichen zylindrischen Gestalt des rohrförmigen Mantels mit Vorteil der Mantel des Schmelzestrahles am Austritt oder nach dem Austritt in die Granulierkammer an seiner Außenseite mit heißen Gasen zur Stabilisierung einer im wesentlichen zylindrischen Gestalt des rohrförmigen Mantels beaufschlagt wird. Mit einer derartigen Verfahrensweise, welche nur geringe Modifikationen bei der bereits bekannten Einrichtung erfordert, lassen sich somit die für eine besonders feine Zerteilung und für die Ausbildung entsprechend kugeliger Teilchen gewünschten Parameter in weiten Grenzen variieren, sodass das Ausbringen an sphäroidisierten Teilchen mit besonders kleinem Durchmesser optimiert werden kann. Für eine derartige Sphäroidisierung ist es erforderlich die Teilchen zunächst eine bestimmte Mindestzeit auf hoher Temperatur zu halten und oberflächenspannungsbedingt die Ausbildung entsprechend kleiner kugeliger Teilchen zu begünstigen. Eine zu rasche Abkühlung könnte zur bevorzugten Ausbildung von fadenförmigen Strukturen führen, welche durch die erfindungsgemäße Verfahrensführung vermieden werden kann.

Die erfindungsgemäße Vorrichtung zum Zerstäuben und Granulieren von Schmelzen, insbesondere oxidischen Schlacken-, Glas- oder thermoplastischen Schmelzen, welche aus einer beheizten Vorkammer über eine Austragsöffnung mit einem Treibstrahl in eine Granulierkammer ausgestoßen werden, wobei eine Treibstrahldüse im Inneren der Vorkammer angeordnet ist und von einem in die Schmelze eintauchenden, höhenverstellbaren Rohr umgeben ist, ist zur Durchführung dieses Verfahrens bevorzugt so weitergebildet, dass das Rohr in axialem Abstand von dem in die Schmelze unter Ausbildung eines Ringspaltes zur Austragsöffnung eintauchenden Ende radiale Durchbrechungen aufweist, welche in den Gasraum der Vorkammer oberhalb der Schmelze münden, und dass ein das Rohr umgebender in axialer Richtung oder in Umfangsrichtung verstellbarer Schieber zur Einstellung des lichten Durchtrittsquerschnittes der Durchbrechungen angeordnet ist. Mit einer derartigen Vorrichtung kann nun durch Anheben und Absenken des die radiale Durchbrechung aufweisenden Rohres der entsprechende Ringspalt und damit die Ausbildung eines dünnen Filmes eingestellt werden, wobei durch den in axialer- oder in Umfangsrichtung verstellbaren Schieber, welcher mit den radialen Durchbrechungen zusammenwirkt, die jeweils aus dem Brennerraum oberhalb der Schmelze angesaugte Menge an heißen Verbrennungsgasen geregelt werden kann. Es kann somit durch einen Anteil an Verbrennungsgasen mit Temperaturen von 1600°C bis 1800°C, je nach dem Ausmaß der gewünschten Überhitzung der Schmelze, eine entsprechende Temperatur des Treibgasstromes im Bereich der Mündung- bzw. Auslassöffnung sichergestellt werden, welche eine hinreichend hohe Gasviskosität und damit hinreichend hohe Scherkräfte für eine wirksame Zerteilung sicherstellt. Im Bereich des Tundishauslaufes bzw. der Austragsöffnung der Vorkammer kann nun bereits die erste formgebende Maßnahme zur Stabilisierung der im wesentlichen zylindrischen Gestalt des rohrförmigen Schmelzemantels erfolgen, wofür die Ausbildung bevorzugt so getroffen ist, dass die Austragsöffnung als Ringdüse ausgebildet ist und mit einem Treibmediumanschluss verbunden ist. Für die Erzielung der entsprechend hohen Gastemperaturen ist mit Vorzug in der Vorkammer wenigstens ein Brenner angeordnet.

Um eine gewisse Verweilzeit zur Ausbildung entsprechend sphäroidisierter Teilchen zu gewährleisten ist die Granulierkammer bevorzugt so ausgebildet, dass sie in dem der Austragsöffnung der Vorkammer benachbarten Bereich einen sich konisch erweiternden, lichten Querschnitt aufweist, in welchem weitere radial gerichtete Düsen und/oder Brenner angeordnet sind, wobei hier zum einen die Teilchentemperatur aufrecht erhalten werden kann oder aber bei entsprechend leicht abwärts gerichteten Düsen bereits zusätzliche Kühlmittel eingeblasen werden können. Dieser Bereich dient bei hohen Treibgas-Düsen-Vordrücker (5bar bis 10 bar) der Nachexpansion, ähnlich dem divergierenden Auslaufteil einer Lavaldüse. Die eigentliche Kühlzone schließt an diesen Teilbereich der Granulierkammer an und die Ausbildung ist hierbei bevorzugt so getroffen, dass die Granulierkammer im Anschluss an den sich konisch erweiternden Querschnitt zumindest teilweise als Strahlungskühlkammer ausgebildet ist. Eine besonders rasche endgültige Abkühlung kann dadurch erreicht werden, dass die Granulierkammer eine kalte Wirbelschicht umschließt.

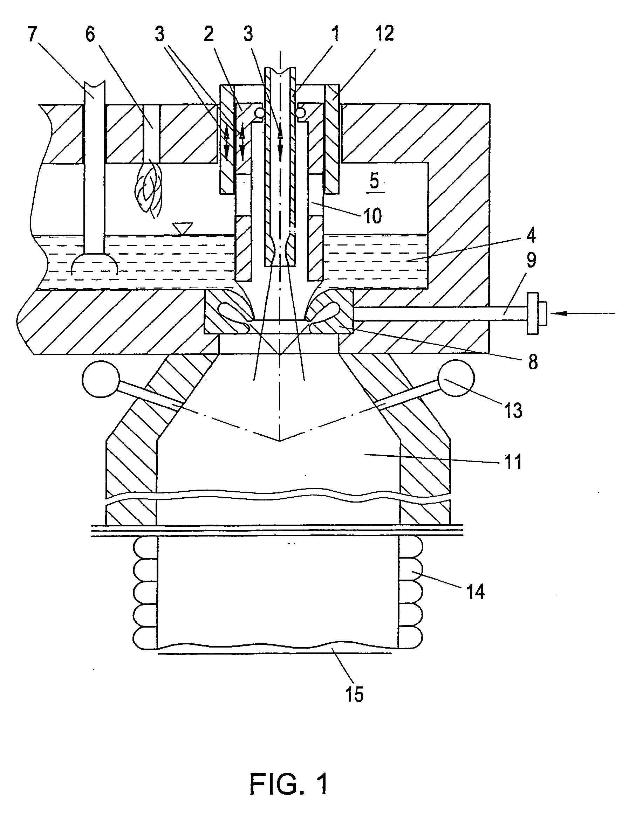

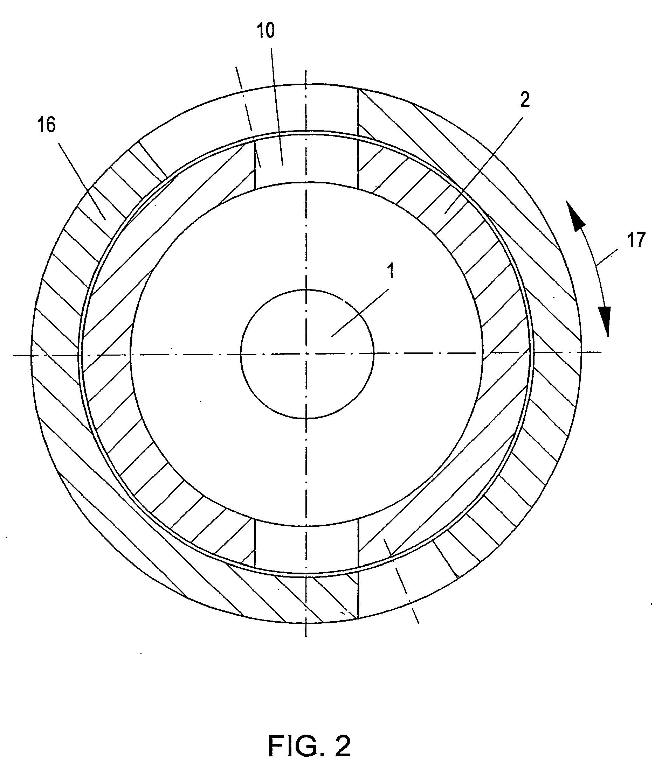

Die Erfindung wird nachfolgend anhand eines in der Zeichnung schematisch dargestellten Ausführungsbeispieles einer für die Durchführung des erfindungsgemäßen Verfahrens besonders geeigneten Vorrichtung näher erläutert. In dieser zeigen Fig.1 einen Querschnitt durch den zerstäuberkopf einer bevorzugten Vorrichtung zur Durchführung des erfindungsgemäßen Verfahrens und Fig.2 einen Schnitt durch die Ventileinrichtung bzw. die Drosseleinrichtung für das Ansaugen von heißem Verbrennungs-Abgas mit einer Treibstrahldüse.

In Fig.1 ist eine Lanze 1 mit einer Primärdüse ersichtlich, über welche Treibgase bzw. Treibdampf eingebracht werden. Die Lanze 1 wird von einem ersten zylindrischen Rohr 2 umgeben, welches als Wehrrohr ausgebildet ist und in Richtung des Doppelpfeiles 3 in Höhenrichtung verschiebbar und dicht an der Lanze 1 geführt wird. Auch die Lanze 1 kann in Richtung des Doppelpfeiles 3 in Höhenrichtung verstellt werden. Das Wehrrohr 2 taucht in eine Schmelze 4 ein, welche in einer Vorkammer 5 bzw. in einem Tundish vorgelegt wird. Die Vorkammer 5 bzw. der Tundish ist entsprechend geschlossen ausgebildet und verfügt über Brenner 6, mit welchen die Schmelze 4 überhitzt werden kann. Zusätzlich ist ein Lanzenbrenner 7 ersichtlich, mit dem gegebenenfalls eine Schaumschlacke erzeugt werden könnte, da auch derartige Schaumschlacken mit der erfindungsgemäßen Einrichtung ohne weiteres verdüst werden können.

Der Tundishauslauf bzw. die Austragsöffnung der Vorkammer 5 ist als Ringdüse 8 ausgebildet, welcher über eine Leitung 9 Treibdampf oder Treibgas zugeführt werden kann. Im Bereich dieser Ringdüse 8 bildet sich bedingt durch die axiale Freigabe eines Ringspaltes durch das Wehrrohr 2 ein schlauchförmiger Film, in dessen Seele über die Lanze 1 Treibmittel eingestoßen werden kann. Da das Treibgas bzw. der Treibdampf vergleichsweise niedere Temperaturen aufweist, könnte es im Bereich der Austragsöffnung 8 zu unerwünschter vorzeitiger Erstarrung der Schmelze kommen. Um nun beim Versprühen ein entsprechend heißes und hochviskoses Gas zu erhalten, wird aus dem Gasraum der Vorkammer 5 das von den Brennern 6 gebildete Verbrennungsabgas über radiale Durchbrechungen 10 des Wehrrohres 2 angesaugt und mit dem Treibstrahl vermischt und in einen nachfolgenden Granulierraum 11 ausgestoßen. Um das Ausmaß dieser Ansaugung zu regulieren ist ein Drosselschieber 12 vorgesehen, welcher das Wehrrohr im Bereich der radialen Durchbrechungen 10 umkreist und entweder in Höhenrichtung wiederum in Übereinstimmung mit dem Doppelpfeil 3 verschiebbar sein kann, um die Öffnungen mehr oder minder weit abzudecken oder freizugeben, oder aber in Umfangsrichtung verschwenkbar ausgebildet sein kann.

Der dünne filmartige Schlauch der Schmelze gelangt nun nach dem Verlassen der Austrittsöffnung 8 in den Kühlraum 11, wobei in einem ersten sich konisch erweiternden Bereich dieses Kühlraumes eine weitere Ringdüse 13 ersichtlich ist, über welche Treibgase, insbesondere heißes Brennergas mit Temperaturen von etwa 1400 °C bis 1800°C, eingebracht werden können. Anstelle dieser an die Ringleitung angeschlossenen Düsen können naturgemäß hier auch Brenner für eine Nacherwärmung angeordnet werden. Erst im Anschluss an einen ersten Teilbereich der Kühlkammer erfolgt die Kühlung durch Strahlungskühlung, insbesondere zur autothermen Treibdampf (Gas-)- Erzeugung, wofür die Wände der Granulierkammer mit Kühlschlangen 14 versehen sind. Schließlich kann am Boden des Granulierraumes eine Thermoschockkühlung in Form einer kalten Wirbelschicht 15 vorgesehen sein. In diesem eigentlichen Kühlbereich kann auch einen entsprechende Wärmerückgewinnung vorgenommen werden.

Bei der Ausbildung nach Fig.2 ist nun ein Schnitt durch die Lanze 1, das Wehrrohr 2 und eine abgewandelte Ausbildung des Drosselschiebers ersichtlich, welcher nunmehr mit 16 bezeichnet wird. Anstelle des in Fig.1 mit 12 bezeichneten Schiebers, welcher in Höhenrichtung im Sinne des Doppelpfeiles 3 verschiebbar war, ist die Hülse 16 nunmehr in Umfangsrichtung in Richtung des Pfeiles 17 verdrehbar und gibt bei ihrer Verdrehung einen mehr oder minder großen Teilbereich der radialen Durchbrechungen 10 des Wehrrohres frei oder deckt diesen ab. Auch mit einer derartigen Ausgestaltung wird somit die entsprechende Einstellung der angesaugten Heißgasmenge aus dem Gasraum des Tundish bzw. der Vorkammer geregelt, wobei die entsprechenden axialen Verstellbarkeiten der Lanze und des Wehrrohres unverändert aufrecht erhalten werden, um die für die feine Verteilung des schlauchartigen Filmes erforderlichen Parameter optimal einstellen zu können.

Bei feststehender "Ventilhülse" kann das Wehrrohr auch permanent gedreht werden. Dabei erfolgt ein impulsartiges Einsaugen des Tundish-Heiß-Abgases, wodurch sich Vorteile bei der Zerstäubung ergeben. Die Dreh-Frequenz ergibt gemeinsam mit einem fix eingestellten Ventil-Hub eine spezifische Heißgas-Menge. Ein weiterer Vorteil der Wehrrohr-Rotation besteht in einer Verringerung der Struktur-Viskosität und einer besseren Wärmeverteilung durch einen Rühr-Effekt.

Im Übrigen kann die Vorkammer auch unter einem Überdruck gegenüber der Kühlkammer stehen, sodass heiße Verbrennungsgase nicht nur angesaugt sondern auch unter Druck ausgestoßen werden.

## Patentansprüche

1. Verfahren zum Zerstäuben und Granulieren von Schmelzen, insbesondere oxidischen Schlacken-, Glas- oder thermoplastischen Schmelzen, bei welchem die Schmelzen in einer Vorkammer mit Brennern erhitzt und als einen Treibstrahl umgebender Mantel in eine Granulierkammer ausgestoßen werden, **dadurch gekennzeichnet, dass** dem Treibstrahl heiße Verbrennungsgase aus der Vorkammer zugemischt werden.

2. Verfahren nach Anspruch 1, **dadurch gekennzeichnet, dass** die heißen Verbrennungsgase der Vorkammer über einen einstellbaren Drosselquerschnitt in einen die Treibstrahldüse umgebenden Ringraum angesaugt und mit dem Treibstrahl als Seele des rohrförmigen Schmelzestrahles in den Granulierraum ausgestoßen werden.

3. Verfahren nach Anspruch 1 oder 2, **dadurch gekennzeichnet, dass** der Mantel des Schmelzestrahles am Austritt oder nach dem Austritt in die Granulierkammer an seiner Außenseite mit heißen Gasen zur Stabilisierung einer im wesentlichen zylindrischen Gestalt des rohrförmigen Mantels beaufschlagt wird.

4. Vorrichtung zum Zerstäuben und Granulieren von Schmelzen, insbesondere oxidischen Schlacken-, Glas- oder thermoplastischen Schmelzen, welche aus einer beheizten Vorkammer (5) über eine Austragsöffnung mit einem Treibstrahl in eine Granulierkammer (11) ausgestoßen werden, wobei eine Treibstrahldüse (1) im Inneren der Vorkammer (5) angeordnet ist und von einem in die Schmelze (4) eintauchenden, höhenverstellbaren Rohr (2) umgeben ist, **dadurch gekennzeichnet, dass** das Rohr (2) in axialem Abstand von dem in die Schmelze (4) unter Ausbildung eines Ringspaltes zur Austragsöffnung eintauchenden Ende radiale Durchbrechungen (10) aufweist, welche in den Gasraum der Vorkammer (5) oberhalb der Schmelze münden, und dass ein das Rohr (2) umgebender in axialer Richtung (3) oder in Umfangsrichtung (17) verstellbarer Schieber (12) zur Einstellung des lichten Durchtrittsquerschnittes der Durchbrechungen (10) angeordnet ist.

5. Vorrichtung nach Anspruch 4, **dadurch gekennzeichnet, dass** die Austragsöffnung als Ringdüse (8) ausgebildet ist und mit einem Treibmediumanschluss verbunden ist.

6. Vorrichtung nach Anspruch 4 oder 5, **dadurch gekennzeichnet, dass** in der Vorkammer (5) wenigstens ein (6) Brenner angeordnet ist.

7. Vorrichtung nach den Ansprüchen 4, 5 oder 6, **dadurch gekennzeichnet, dass** die Granulierkammer (11) in dem der Austragsöffnung der Vorkammer (5) benachbarten Bereich einen sich konisch erweiternden, lichten Querschnitt aufweist, in welchem weitere radial gerichtete Düsen (13) und/oder Brenner angeordnet sind.

8. Vorrichtung nach einem der Ansprüche 4 bis 7, **dadurch gekennzeichnet, dass** die Granulierkammer (11) im Anschluss an den sich konisch erweiternden Querschnitt als Strahlungskühlkammer ausgebildet ist.

9. Vorrichtung nach einem der Ansprüche 4 bis 8, **dadurch gekennzeichnet, dass** die Granulierkammer (11) eine kalte Wirbelschicht (15) umschließt.

## Claims

1. Process for pulverizing and granulating melts, especially oxidic slag-, glass- or thermoplastic melts in which the melts are heated with burners in an antechamber and are ejected into a granulating chamber as a shell surrounding a propellant stream, **characterized in that** hot combustion gases from the antechamber are mixed with the propellant stream.

2. Process according to claim 1, **characterized in that** the hot combustion gases of the antechamber are suctioned through an adjustable throttle cross section into a ring chamber surrounding the propellant stream nozzle and are ejected with the propellant stream as the core of the tube-shaped melt stream into the granulating chamber.

3. Process according to claim 1 or 2, **characterized in that** the shell of the melt stream is stressed at the output or after the output into the granulating chamber, on its outside, with hot gases for stabilizing an essentially cylindrical structure of the tube-shaped shell.

4. Device for pulverizing and granulating melts, especially oxidic slag-, glass- or thermoplastic melts, which are ejected out of a heated antechamber (5) through an outlet opening with a propellant stream into a granulating chamber (11), whereby a propellant stream nozzle (1) is arranged inside the antechamber (5) and surrounded by a height-adjustable pipe (2) that immerses into the melt (4), **characterized in that** pipe (2) has radial passages (10) at an axial distance from the end that is immersed in the melt (4) with formation of a ring slot to the outlet opening, which open out into the headspace of the antechamber (5) above the melt and that a slide (12) surrounding the pipe (2) and adjustable in axial direction (3) or in circumference direction (17) is arranged for adjusting the inner passage cross section of the passages (10).

5. Device according to claim 4, **characterized in that** the outlet opening is designed as a concentric nozzle (8) and connected to a propellant medium connection.

6. Device according to claims 4 or 5, **characterized in that** at least one burner (6) is arranged in the antechamber (5).

7. Device according to claims 4, 5 or 6, **characterized in that** the granulating chamber (11), in the area adjacent to the outlet opening of the antechamber (5), has an inner cross section that expands conically in which further radially oriented nozzles (13) and/or burners are arranged.

8. Device according to one of claims 4 to 7, **characterized in that** the granulating chamber (11), following the conically expanding cross section, is designed as a radiant cooling chamber.

9. Device according to one of claims 4 to 8, **characterized in that** the granulating chamber (11) surrounds a cold fluidised bed (15).

## Revendications

1. Procédé de pulvérisation et de granulation de masses fondues, en particulier de masses fondues de laitiers contenant des oxydes, de masses fondues de verre ou de masses fondues thermoplastiques, dans lequel les masses fondues sont chauffées dans une préchambre au moyen de brûleurs et sont éjectées dans une chambre de granulation sous la forme d'une enveloppe entourant un jet de propulsion, **caractérisé en ce que** sont ajoutés au jet de propulsion des gaz de combustion chauds provenant de la préchambre.

2. Procédé selon la revendication 1, **caractérisé en ce que** les gaz de combustion chauds de la préchambre sont aspirés, via une section à étranglement réglable, dans un espace annulaire entourant la tuyère à jet de propulsion, et sont éjectés dans la chambre de granulation avec le jet de propulsion comme noyau du jet tubulaire de masses fondues.

3. Procédé selon la revendication 1 ou 2, **caractérisé en ce que** l'enveloppe du jet de masses fondues à la sortie ou après la sortie dans la chambre de granulation reçoit, sur sa face extérieure, des gaz chauds pour stabiliser une forme sensiblement cylindrique de l'enveloppe tubulaire.

4. Dispositif de pulvérisation et de granulation de masses fondues, en particulier de masses fondues de laitiers contenant des oxydes, de masses fondues de verre ou de masses fondues thermoplastiques qui, à partir d'une préchambre (5) chauffée, sont éjectées avec un jet de propulsion, via un orifice d'évacuation, dans une chambre de granulation (11), une tuyère (1) à jet de propulsion étant disposée à l'intérieur de la préchambre (5) et entourée d'un tube (2) réglable en hauteur et plongeant dans la masse fondue (4), **caractérisé en ce que** le tube (2) présente, à une distance axiale de l'extrémité plongeant dans la masse fondue (4) en formant une fente annulaire vers l'orifice d'évacuation, des perforations radiales (10) qui débouchent dans le compartiment des gaz de la préchambre (5) au-dessus de la masse fondue, et **en ce qu'**un coulisseau (12) entourant le tube (2) et réglable dans la direction axiale (3) ou dans la direction circonférentielle (17), est disposé pour régler la section de passage intérieure des perforations (10).

5. Dispositif selon la revendication 4, **caractérisé en ce que** l'orifice d'évacuation est réalisé sous forme de buse annulaire (8) et est relié à un raccord d'agent propulseur.

6. Dispositif selon la revendication 4 ou 5, **caractérisé en ce qu'**est disposé au moins un brûleur (6) dans la préchambre (5).

7. Dispositif selon les revendications 4, 5 ou 6, **caractérisé en ce que** la chambre de granulation (11) présente, dans la région adjacente à l'orifice d'évacuation de la préchambre (5), une section intérieure s'élargissant de manière conique dans laquelle sont disposés d'autres tuyères (13) et/ou brûleurs orientés radialement.

8. Dispositif selon l'une des revendications 4 à 7, **caractérisé en ce que** la chambre de granulation (11) faisant suite à la section s'élargissant de manière conique est réalisée sous forme de chambre de refroidissement par radiation.

9. Dispositif selon l'une des revendications 4 à 8, **caractérisé en ce que** la chambre de granulation (11) renferme un lit fluidisé froid (15).
